Europäisches Patentamt

(19) European Patent Office

Office européen des brevets

(11) Numéro de publication : **0 217 842
B1**

(12) FASCICULE DE BREVET EUROPÉEN

(45) Date de publication du fascicule du brevet :
24.01.90

(51) Int. Cl.⁵ : **B 62 M   1/02**

(21) Numéro de dépôt : 86901891.1

(22) Date de dépôt : 12.03.86

(86) Numéro de dépôt international :
PCT/FR 86/00080

(87) Numéro de publication internationale :
WO/8605459 (25.09.86 Gazette 86/21)

(54) PEDALIER POUR BICYCLETTE OU ENGIN DE LOCOMOTION ANALOGUE.

(30) Priorité : 13.03.85 CH 1121/85

(43) Date de publication de la demande :
15.04.87 Bulletin 87/16

(45) Mention de la délivrance du brevet :
24.01.90 Bulletin 90/04

(84) Etats contractants désignés :
AT BE CH DE FR GB IT LI NL

(56) Documents cités :
FR--A--   763 303
FR--A--   905 476
FR--A--   978 674
FR--A--   984 583
FR--A-- 2 520 692
FR--A-- 2 526 392
US--A-- 4 159 652

(73) Titulaire : Bregnard, Jean Pierre
10, rue des Fleurs
CH-2300 La Chaux-de-Fonds (CH)

Grandjean, Philippe
15, Vieux Chatel
CH-2000 Neuchâtel (CH)

Ferraroli, Alain
20, rue Moulin
CH-2300 La Chaux-de-Fonds (CH)

Ferraroli, Florent
73a, rue Charrière
CH-2300 La Chaux-de-Fonds (CH)

(72) Inventeur : BREGNARD, Jean-Pierre
10, rue des Fleurs
CH-2300 La Chaux de Fonds (CH)
Inventeur : BEZIN, Michel
42bis, boulevard Victor Hugo
F-58000 Nevers (FR)
Inventeur : BOISOT, Yves
Veninges
F-58640 Varennes Vauzelles (FR)

(74) Mandataire : Caron, Gérard et al
ICB Ingénieurs Conseils en Brevets SA Passage
Max. Meuron 6
CH-2001 Neuchâtel (CH)

## Description

La présente invention est relative à un pédalier pour bicyclette, ou pour engin de locomotion analogue, où l'entraînement des roues s'effectue au moyen d'une chaîne actionnée par un plateau commandé par le pédalier.

Le pédalier d'une bicyclette comporte habituellement deux manivelles associées chacune à une pédale et montées aux extrémités respectives d'un arbre qui traverse axialement une boîte de pédalier prévue à la partie inférieure du cadre. Cet arbre porte également le ou les plateaux dentés destinés à la commande de la chaîne. L'ensemble tourne de concert autour de l'axe défini par la boîte de pédalier. Les manivelles étant diamétralement alignées de façon rigide, il se trouve qu'à leurs points morts haut et bas, c'est-à-dire lorsqu'elles sont verticales, l'effort du cycliste n'est pas transformé en une force d'entraînement de la chaîne, tandis que, à quelque distance angulaire de part et d'autre de ces points morts, cet effort est transmis avec peu d'efficacité.

Pour tenter de pallier ces inconvénients, il est déjà connu (par exemple, par le certificat d'utilité FR-A-2 526 392) de désolidariser les manivelles du plateau et de les faire tourner autour d'un axe différent de celui autour duquel tourne ce plateau. Des moyens de transmission sont alors prévus pour coupler les manivelles au plateau de telle manière que le décalage entre les deux systèmes rotatifs ne soit gênant à aucun moment. Il en résulte cependant que la position angulaire des deux manivelles l'une par rapport à l'autre varie constamment au cours de la rotation du pédalier.

De la description du certificat d'utilité français précité, on peut déduire que les moyens de transmission sont formés de deux guides, un par manivelle, orienté radialement et solidaire de ces manivelles. Chaque guide coopère avec un galet qui est monté fixe dans le plateau de manière à décrire avec celui-ci un mouvement orbital autour du centre du plateau.

L'un des guides est directement prévu sur une manivelle (celle de droite par exemple), tandis que l'autre est prévu sur un levier fixé à l'axe du pédalier et solidaire de l'autre manivelle (disposée à gauche sur cet axe).

Par ailleurs, le certificat d'utilité précité prévoit un dispositif de réglage du décalage entre les axes des manivelles, d'une part, et du plateau, d'autre part, afin de pouvoir ajuster l'inclinaison relative des manivelles l'une par rapport à l'autre.

Si ce dispositif antérieur permet alors effectivement d'éviter un alignement vertical des manivelles et donc leur passage simultané par les points morts haut et bas, il faut observer que ce résultat est obtenu moyennant une construction qui est peu rationnelle et qui le rend pratiquement inutilisable.

Tout d'abord, en effet, l'encombrement transversal de ce pédalier est considérable et les manivelles sont, de ce fait, écartées l'une de l'autre d'une distance importante et prohibitive. Ceci non seulement est défavorable sur le plan de l'aérodynamisme mais aussi, et surtout, crée de l'inconfort pour le cycliste qui doit ainsi pédaler avec un écartement trop grand entre les pieds.

Cet encombrement transversal important selon l'axe des manivelles est dû au fait que l'arbre du pédalier doit dépasser vers la droite de la boîte sur une distance notable afin de pouvoir constituer un palier de rotation pour la manivelle de droite ainsi qu'une possibilité de fixation du levier qui assure la transmission de la force au plateau à partir de la manivelle de gauche. En d'autres termes, l'arbre du pédalier présente un porte-à-faux très important à la sortie de la boîte de pédalier, alors que, précisément, tout l'effort des manivelles se trouve appliqué à ce bout d'arbre en porte-à-faux. Comme la contrainte à laquelle l'arbre est ainsi soumise est constamment variable, l'arbre subit des déformations également variables et répétitives, ce dont il résulte un risque très grave de rupture.

De plus, du fait qu'au moins l'une des manivelles comporte un guide, elle ne peut être d'un type normalisé disponible dans le commerce. Ceci augmente non seulement le prix de revient du pédalier, mais également les frais de réparation si cette manivelle doit être remplacée, pour une cause ou une autre.

En outre, le mécanisme décrit dans ce document antérieur est totalement exposé en fonctionnement aux salissures et aux projections de gravillons, y compris les glissières et les galets qui coopèrent entre eux pour la transmission du mouvement, de sorte que le dispositif devient rapidement inutilisable si on ne le nettoie pas régulièrement avec soin.

L'invention a pour but de fournir un pédalier du type général décrit ci-dessus, mais permettant d'éviter les inconvénients cités, ce pédalier étant d'une construction ramassée, pratiquement étanche et donc peu sujet à des pannes dues à des salissures, et d'une solidité comparable à celle des pédaliers classiques qui comportent une liaison rigide entre les manivelles et le plateau.

Il convient également de signaler qu'un pédalier présentant un décalage entre les axes de rotation du plateau et des manivelles a été décrit également dans le certificat d'utilité FR-A-2 520 692. La construction de ce mécanisme est très semblable à celle du dispositif décrit dans le certificat d'utilité FR-A-2 526 392 déjà cité et en comporte donc les inconvénients. Au surplus, dans ce deuxième certificat d'utilité, la disposition relative du plateau et des manivelles est telle que celles-ci se trouvent alignées dans leur position verticale. Cette construction connue conserve donc les désavantages des pédaliers rigides en ce qui concerne le passage simultané des manivelles par les points morts haut et bas.

Par ailleurs, il est connu du document FR-A-763 303 un pédalier de même type que celui du document FR-A-252 392, la différence entre ces derniers résident dans le fait que, dans le document FR-A-763 303, les organes cylindriques de transmission sont portés par les manivelles tandis que les guides sont ménagés dans le plateau. Cette construction présente donc les mêmes inconvénients que ceux du document FR-A-252 392. L'invention a donc pour but de remédier aux inconvénients de l'art antérieur suscité.

A cet effet, l'invention a pour objet un pédalier pour bicyclette comprenant deux manivelles qui portent les pédales et sont montées à rotation relative l'une par rapport à l'autre autour d'un premier axe dans la boîte de pédalier solidaire du cadre de la bicyclette, un ensemble comprenant au moins un plateau pourvu d'une denture pour la commande de la chaîne, monté rotatif sur ladite boîte autour d'un second axe parallèle au premier axe, mais décalé par rapport à celui-ci au moyen d'une bague d'excentrement, fixée sur la boîte de pédalier et présentant une surface externe cylindrique centrée sur le second axe, et des moyens de transmission comprenant, pour chaque manivelle, un guide orienté radialement par rapport au premier axe et un organe cylindrique de transmission destiné à se déplacer vis-à-vis de ce guide tout en s'appuyant sur celui-ci dans une direction circonférentielle pour la transmission de l'effort de pédalage, lesdits organes cylindriques de transmission décrivant au cours de la rotation des manivelles un mouvement oscillant.

Conformément à l'invention, ledit ensemble comprend en outre un carter composé de deux flasques coaxiaux espacés et centrés sur ledit premier axe, chaque organe cylindrique de transmission étant monté à rotation par chacune de ses extrémités dans les flasques.

Il résulte tout d'abord de ces caractéristiques que les manivelles sont dépourvues de tout usinage particulier, de sorte qu'elles peuvent, le cas échéant, être d'un type normalisé, actuellement disponible dans le commerce.

Par ailleurs, étant donné que les manivelles ont chacune leur propre arbre portant en même temps le guide qui lui est associé, on obtient une construction compacte, surtout dans le sens axial, ce qui réduit à un minimum le porte-à-faux des arbres hors de leurs paliers montés dans la boîte de pédalier.

Enfin, il devient possible de renfermer l'ensemble du mécanisme dans un carter étanche, le protégeant contre les influences nuisibles venant de l'extérieur.

Dans un mode de réalisation particulier de l'invention, les manivelles sont respectivement solidaires de deux arbres coaxiaux montés à rotation l'un par rapport à l'autre, les guides étant fixés sur lesdits arbres à une de leurs extrémités communes.

Dans une autre variante de réalisation, l'une des manivelles est solidaire d'un arbre tourillonnant à travers la boîte de pédalier et terminé à son extrémité du côté du plateau par le guide correspondant, l'autre manivelle étant montée coaxialement audit arbre et étant solidaire de son propre guide s'étendant parallèlement à ladite manivelle.

L'invention sera mieux comprise à la lecture de la description qui va suivre de divers exemples de réalisation donnés uniquement à titre indicatif en référence aux dessins annexés sur lesquels :

la figure 1 montre schématiquement une bicyclette munie d'un pédalier suivant l'invention ;

la figure 2 est une vue en élévation du pédalier, vu du côté droit ;

la figure 3 est un diagramme schématisant l'évolution de la vitesse de rotation des manivelles du pédalier, le plateau de celui-ci étant supposé tourner à vitesse constante ; le diagramme montre également l'alignement des manivelles en position horizontale et leur décalage angulaire en position verticale ;

la figure 4 est une vue en coupe horizontale, par un plan contenant les axes de rotation des manivelles et des plateaux, d'un premier mode de réalisation d'un pédalier suivant l'invention, l'avant de la bicyclette étant supposé être situé en haut de la figure ;

la figure 5 est une vue de face du pédalier selon la figure 4, considéré du côté droit de la bicyclette, la moitié extérieure du carter étant omise pour montrer la construction des guides ainsi que leur coopération avec les galets du porte-plateau ;

la figure 6 est une vue en coupe verticale du pédalier effectuée à travers la bague de décentrage et un écrou octogonal qui y est ajusté ;

les figures 7A et 7B sont deux vues schématiques illustrant le fonctionnement du pédalier selon les figures 4 à 6 ;

la figure 8 est une vue en coupe par un plan passant par l'axe de la boîte de pédalier d'un autre mode de réalisation de l'invention ;

la figure 9 est une vue de face du pédalier de la figure 8.

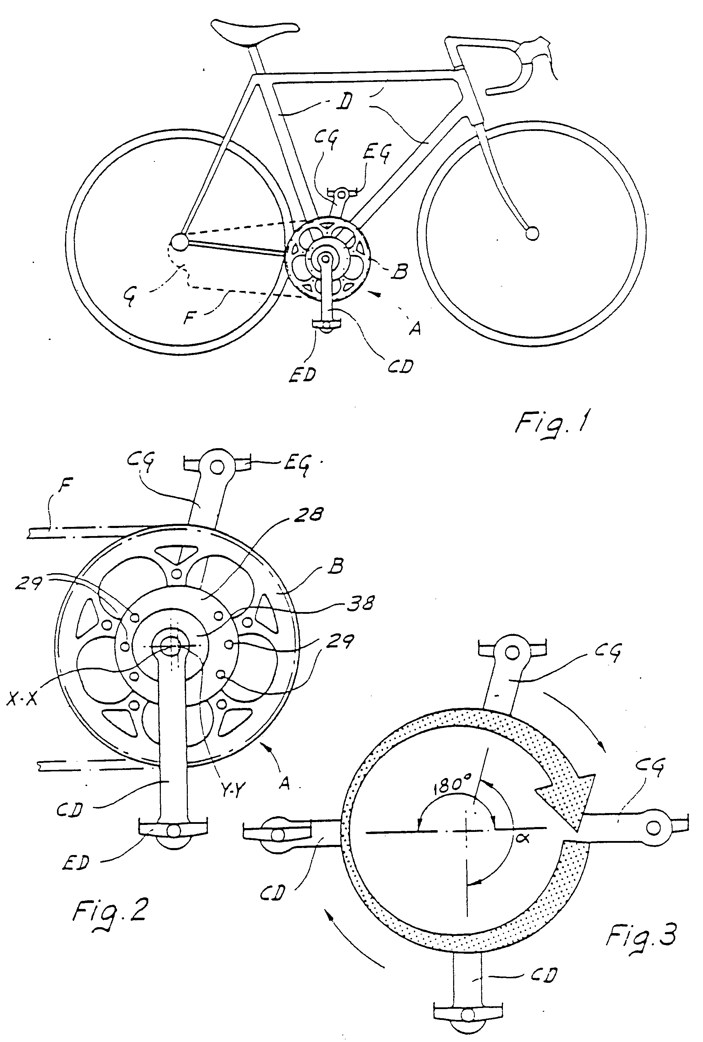

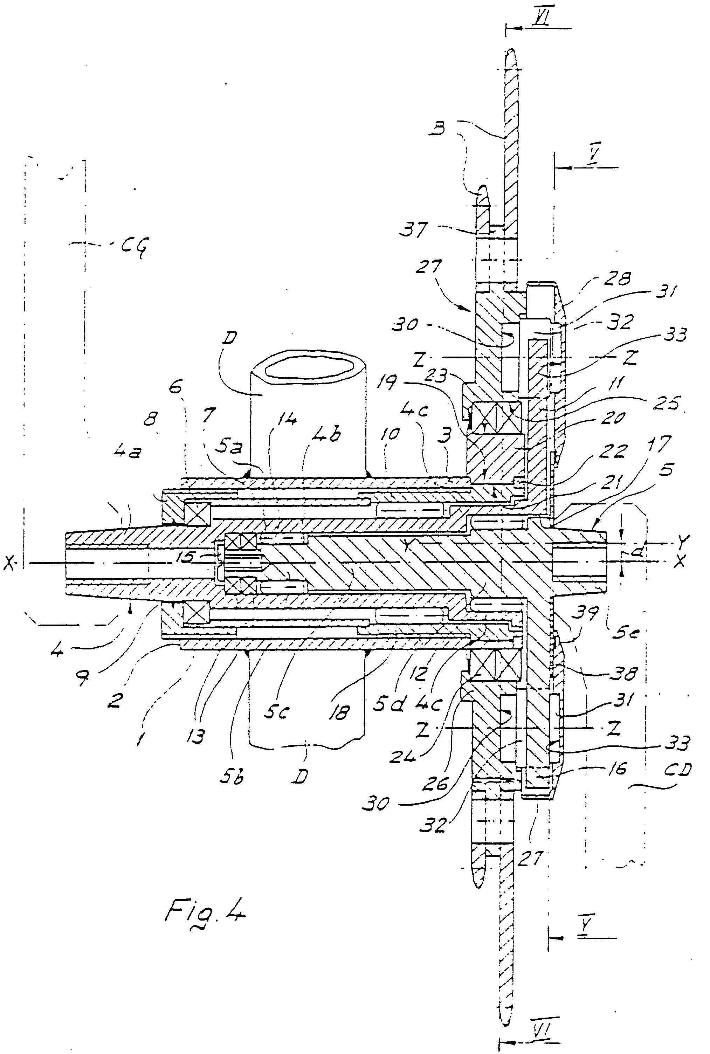

Sur la figure 1, on a représenté une bicyclette qui comporte un pédalier A avec un ou plusieurs plateaux B, ainsi qu'un jeu de manivelles, à savoir une manivelle droite CD et une manivelle gauche CG. Ce pédalier A est réalisé selon les caractéristiques de l'invention. La bicyclette, par ailleurs tout à fait classique, comporte un cadre D auquel est rigidement fixée une boîte de pédalier 1 (voir notamment la figure 4) qui n'est pas visible sur la figure 1. Le pédalier, pourvu de pédales ED et EG, peut entraîner la roue arrière de la bicyclette par l'intermédiaire d'une chaîne F et d'un dérailleur G.

En examinant les figures 2 et 3, on voit que le pédalier A possède deux axes de rotation horizontaux X-X et Y-Y décalés l'un par rapport à l'autre, le premier étant celui autour duquel tournent les manivelles CD et CG et le deuxième, celui qui définit le centre de rotation du ou des plateaux B. Dans le mode de réalisation décrit ici, les axes X-X et Y-Y sont situés dans un même plan horizontal, l'axe Y-Y étant placé devant l'axe X-X lorsque la bicyclette est vue dans le sens de la marche.

La figure 3 montre que les manivelles CD et CG sont alignées l'une par rapport à l'autre seulement lorsqu'elles occupent la position horizontale et que l'angle qu'elles forment entre elles évolue constamment au cours de leur rotation. Plus précisément, l'angle formé par les manivelles, qui est de 180° à l'horizontale, décroît jusqu'à une valeur minimale α, atteinte lorsque la manivelle du bas est verticale, puis augmente à nouveau pour revenir à 180° lorsque les deux manivelles, après un quart de tour, se retrouvent à l'horizontale. Typiquement, l'angle α est de l'ordre de 165° environ. On observe également, en supposant que le plateau B tourne à vitesse constante, que la manivelle descendante (sur la figure 3 la manivelle CG) voit sa vitesse diminuer dans le premier quadrant vers un minimum puis augmenter progressivement dans le second quadrant, tandis que la manivelle montante voit sa vitesse augmenter dans le troisième quadrant vers un maximum puis de nouveau diminuer dans le quatrième quadrant, la flèche d'épaisseur variable représentée sur le schéma illustrant la décélération de la manivelle. Bien entendu, ce processus est le même lorsque la manivelle de droite est descendante et la manivelle de gauche montante. Dans tous les cas, les manivelles ne sont jamais alignées verticalement.

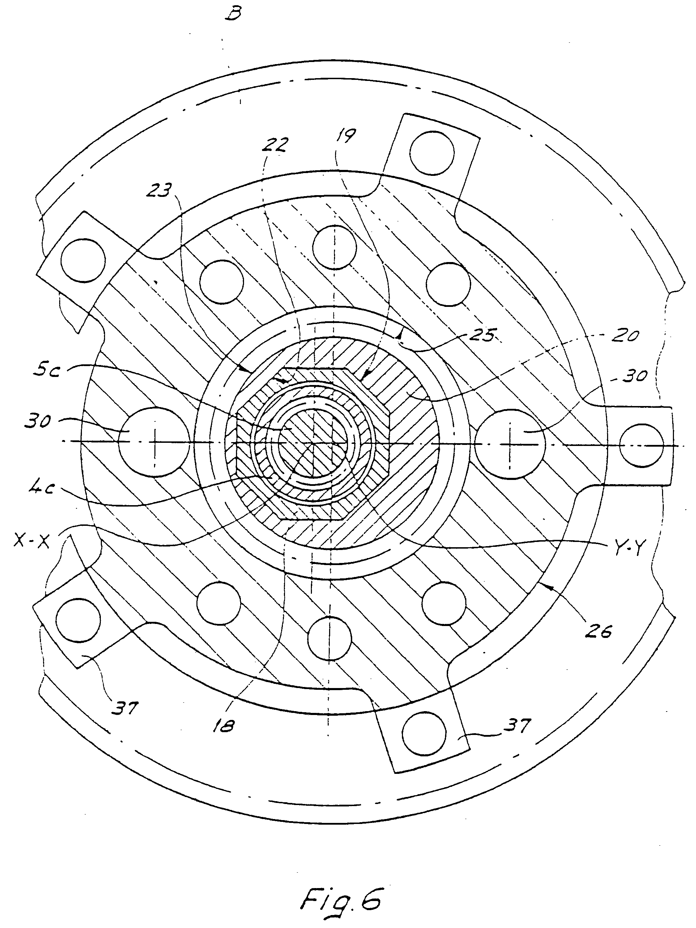

On va maintenant décrire un premier mode de réalisation de l'invention en se référant aux figures 4 à 6.

La boîte de pédalier 1 est formée par un tronçon de tube cylindrique dont l'axe coïncide avec l'axe X-X des manivelles CG et CD. Ce tronçon est fileté intérieurement à ses deux extrémités en 2 et 3.

Deux arbres indépendants 4 et 5 tourillonnent à l'intérieur de la boîte de pédalier 1, à savoir un arbre 4 pour la manivelle de gauche CG et un arbre 5 pour la manivelle de droite CD.

L'arbre 4 est une pièce tubulaire s'évasant de gauche à droite en plusieurs gradins, aussi bien intérieurement qu'extérieurement.

La partie de gauche 4a est filetée intérieurement pour la fixation de la manivelle CG à l'aide d'un boulon (non représenté), cette fixation pouvant être de type normalisé. Extérieurement, la partie 4a est entourée d'un roulement à billes 6 ajusté dans l'extrémité d'un manchon d'entretoisement 7 entourant coaxialement l'arbre 4. Cette même extrémité du manchon 7 est reçue dans un écrou 8 fermant de ce côté la boîte de pédalier 1 et vissé dans le filetage 2. L'étanchéité est assurée sur l'arbre 4 au moyen d'une garniture 9.

La partie intermédiaire 4b de l'arbre 4 s'étend sur la quasi-totalité de la boîte de pédalier 1. Elle est entourée à droite par un roulement à aiguilles 10.

La partie de droite 4c de l'arbre 4 s'étend à l'extérieur de la boîte 1 et elle est solidaire d'un guide 11, qui s'étend radialement par rapport à l'axe X-X. A l'intérieur de la partie de droite 4c est disposé un roulement à aiguilles 12 qui est ajusté sur une portée 5d de l'arbre 5.

Celui-ci est réalisé sous la forme d'une broche étagée massive comportant quatre portées 5a à 5d de diamètre croissant de gauche à droite. Cette broche se termine à droite par une partie filetée 5e pour la fixation, également de façon tout à fait classique, de la manivelle CD.

Les parties 5a et 5b reçoivent chacune des roulements, à savoir deux roulements à billes 13 et un roulement à aiguilles 14 montés dans l'alésage de la partie intermédiaire 4b de l'arbre 4. Une vis 15 maintient les roulements 13 sur leur partie 5a.

Il apparaît ainsi que les arbres 4 et 5 peuvent tourillonner de concert dans le même sens autour de l'axe X-X, tout en étant libres d'osciller l'un par rapport à l'autre autour de ce même axe, sur les roulements 10 et 13.

L'arbre 5 est également solidaire d'un guide 16 s'étendant radialement dans le même plan que le guide 11, mais dans un sens pratiquement opposé par rapport à celui-ci. A cet effet, le guide 11 comporte à son extrémité droite une échancrure périphérique 17 qui s'étend sur un peu plus de 180° afin de ménager un espace pour le guide 16, porté par cet arbre 5.

Un écrou 18 est vissé dans l'extrémité filetée 3 de la boîte de pédalier 1 jusqu'à venir en butée contre le manchon 7, lui-même appuyé axialement contre le roulement 6 et l'écrou 8.

L'écrou 18 s'étend hors de la boîte 1 sur une certaine distance et entoure la partie 4c de l'arbre 4. Dans cette zone, l'écrou 18 présente un profil extérieur polygonal, ici octogonal, 19, sur lequel est reçue une bague de décentrage 20 formant excentrique, elle-même intérieurement pourvue d'une ouverture octogonale 21. Cette bague est maintenue axialement contre le bord d'extrémité de la boîte de pédalier 1 par un anneau fileté de serrage 22 vissé sur l'extrémité filetée correspondante de l'écrou 18.

La surface périphérique extérieure 23 de la bague est cylindrique et décentrée par rapport à l'axe X-X, mais centrée sur l'axe Y-Y qui est décalé d'une distance d par rapport à l'axe X-X. L'axe Y-Y est situé dans le même plan horizontal que l'axe X-X, à l'avant par rapport au sens d'avance normal de la bicyclette.

Un roulement à billes 24 est ajusté sur la surface extérieure 23 de la bague 20. Ce roulement est par ailleurs monté dans une ouverture 25 d'un flasque intérieur 26 d'un carter 27, ce dernier étant donc monté rotatif autour de l'axe Y-Y. Le carter est fermé par un flasque extérieur 28 rapporté sur le flasque 26 par des vis 29 (voir notamment la figure 2). Les plateaux B sont solidaires du carter 27.

Dans le flasque intérieur 26, sont pratiqués deux trous ou logements 30 diamétralement opposés, leurs axes Z-Z étant parallèles aux axes X-X et Y-Y. Les deux axes Z-Z sont situés à égale distance de l'axe Y-Y. Dans ces cuvettes, sont engagés des tourillons 31 sur lesquels sont montés à rotation libre des galets respectifs 32, eux-mêmes emprisonnés dans les guides 11 et 16, respectivement. Les tourillons 31 sont également ajustés dans des cuvettes 33 pratiquées dans le flasque extérieur 28 en regard des logements 30 du flasque intérieur 26. On remarquera que les galets 32 sont montés sur les tourillons 31, eux- mêmes supportés à leurs deux extrémités dans les flasques 26 et 28 respectifs. Il en résulte une suspension à rotation très robuste de ces galets dans leurs guides 11 et 16, sans porte-à-faux.

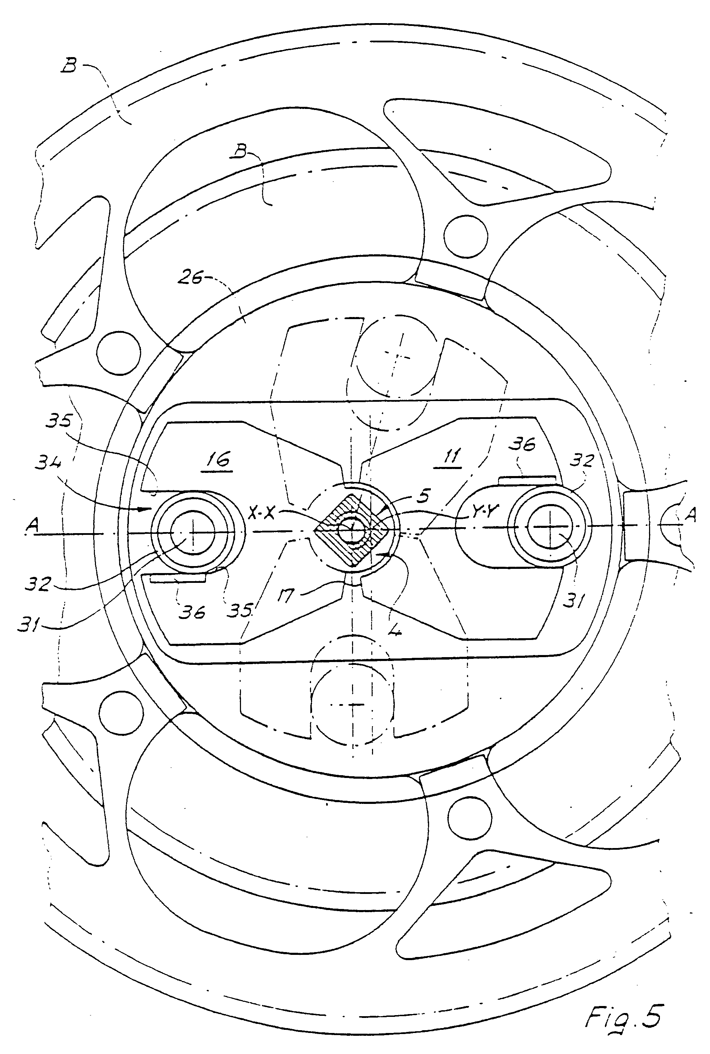

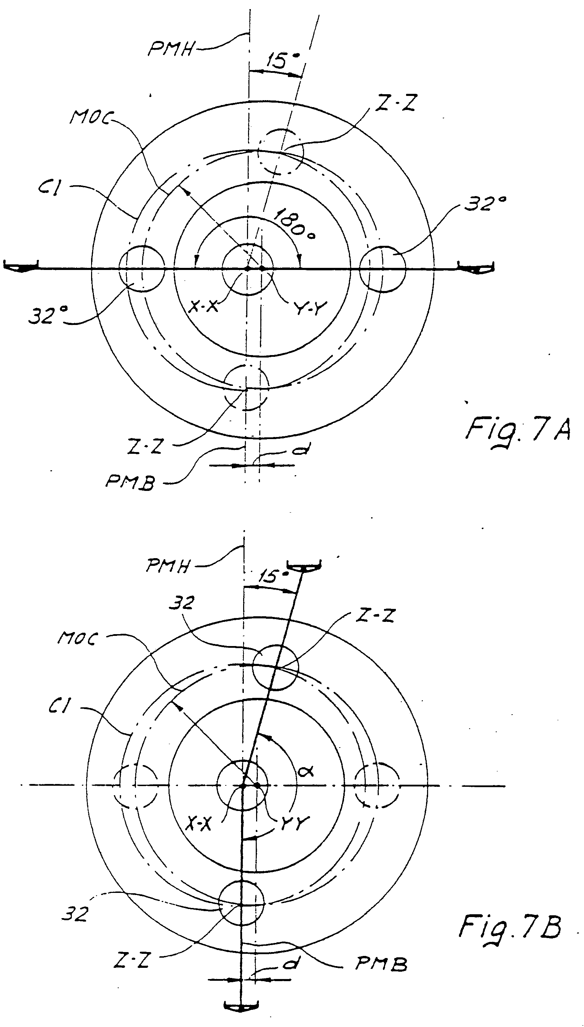

Chaque guide 11 ou 16 (figure 5) se présente dans l'exemple considéré sous la forme d'une plaquette en forme de fourche comportant une encoche 34 à fond arrondi et dont les parois latérales constituent des chemins de roulement pour les galets 32 respectifs. En d'autres termes, ces chemins de roulement confinent les galets dans des espaces dans lesquels ils sont contraints de se déplacer au cours de la rotation des manivelles de part et d'autre d'un trajet défini par une circonférence centrée sur l'axe X-X. Ce mouvement sera explicité davantage à propos des figures 7A et 7B. Pour la transmission de l'effort d'avancement, seule l'une des parois latérales de chaque encoche est active et, à cet effet, elle peut être revêtue d'une garniture 36 à haute dureté.

Le flasque intérieur 26 comporte plusieurs pattes radiales 37 sur lesquelles sont rapportés les plateaux B pour engrener avec la chaîne F de la bicyclette.

Le carter 27 est fermé à l'avant par une plaquette centrale 38 fixée sur l'arbre 4 et qui assure l'étanchéité du carter à l'aide d'un anneau d'étanchéité 39 interposé entre la périphérie de cette plaquette et le bord de l'ouverture centrale du flasque 28. Ainsi, le carter 27 constitue un espace entièrement clos qui protège notamment les guides 11 et 16 et les galets 32 contre les salissures et les gravillons éventuels.

On va maintenant décrire le fonctionnement du pédalier suivant l'invention en se reportant aux figures 7A et 7B, qui représentent respectivement deux positions du pédalier décalées l'une par rapport à l'autre de 90°. Ces positions se répètent à chaque demi-tour du pédalier, à cette différence près, évidemment, que les positions des manivelles gauche et droite s'inversent à chaque fois.

Si on examine le mouvement des galets 32 maintenus dans le carter 27 par rapport à l'axe Y-Y, on constate qu'ils décrivent un mouvement orbital circulaire MOC, car les tourillons 31 ont une position radiale fixe par rapport à cet axe. Cependant, compte-tenu du décalage d entre les axes X-X et Y-Y, ces galets se déplacent par rapport à l'axe X-X selon un mouvement oscillant, faisant passer leur axe Z-Z tantôt à l'intérieur, tantôt à l'extérieur d'une circonférence CI dont le centre est situé sur l'axe X-X et dont le rayon est égal à la distance entre les axes Z-Z et l'axe Y-Y donc égal à celui du cercle MOC. En supposant que la vitesse de rotation du plateau B est constante et que le mouvement commence à partir de la position horizontale alignée (figure 7A), une des manivelles doit accélérer pour rattraper l'effet du décalage des axes X-X et Y-Y, alors que l'autre doit simultanément décélérer. Il en résulte, en définitive, que la première a une vitesse constamment croissante, tandis que l'autre a une vitesse constamment décroissante jusqu'à ce qu'elles se trouvent de nouveau alignées horizontalement. Au cours du tour suivant, l'évolution de la vitesse s'applique évidemment de la même façon mais inversement aux manivelles. Il s'est avéré que cette variation de vitesse, au demeurant assez faible, n'est pas gênante pour le cycliste. Ce qui, en revanche, est très avantageux, c'est que la manivelle qui vient de monter a déjà franchi le point mort haut (symbolisé par le trait mixte PMH sur les figures 7A et 7B), alors que l'autre se trouve au point mort bas PMB. Comme déjà mentionné, le décalage en cette position de la manivelle « haute » peut être de l'ordre de 15 par rapport à la verticale. Inversement, lorsque l'une des manivelles est au point mort haut, l'autre n'a pas encore atteint le point mort bas.

Ce principe de fonctionnement, connu en soi par le certificat d'utilité FR-A-2 526 392, est ici mis en oeuvre, grâce à l'invention, dans une construction d'une beaucoup plus grande simplicité, avec un ensemble ayant une robustesse suffisante pour être utilisée valablement dans un cycle et ne nécessitant pas plus d'entretien qu'un cycle ordinaire pourvu d'un dérailleur et d'un changeur de plateaux classiques.

On remarquera, en effet, que les arbres 4 et 5 sont supportés 4 rotation dans la boîte de pédalier 1 sur une longueur importante, cette caractéristique avantageuse étant encore amplifiée du fait que l'arbre 4 est tubulaire pour recevoir l'arbre 5 sur pratiquement toute sa longueur.

Il est également à noter que les guides 11 et 16 s'étendent dans un même plan radial se trouvant au voisinage immédiat de la sortie de la boîte de pédalier 1. Il y a donc un porte-à-faux quasiment nul des arbres 4 et 5 à l'endroit où ils sont couplés aux guides 11 et 16 chargés de transmettre à leur tour l'effort de pédalage aux plateaux et, de là, à la chaîne de la bicyclette.

En outre, du fait que les arbres 4 et 5, les guides et les galets 32 sont enfermés dans des espaces étanches vis-à-vis de l'extérieur, le mécanisme est bien protégé contre les salissures.

On notera également que les manivelles CG et CD peuvent être classiques, car leur fixation aux arbres 4 et respectifs ne diffère en aucun point de celles utilisées habituellement pour les bicyclettes connues dans la technique.

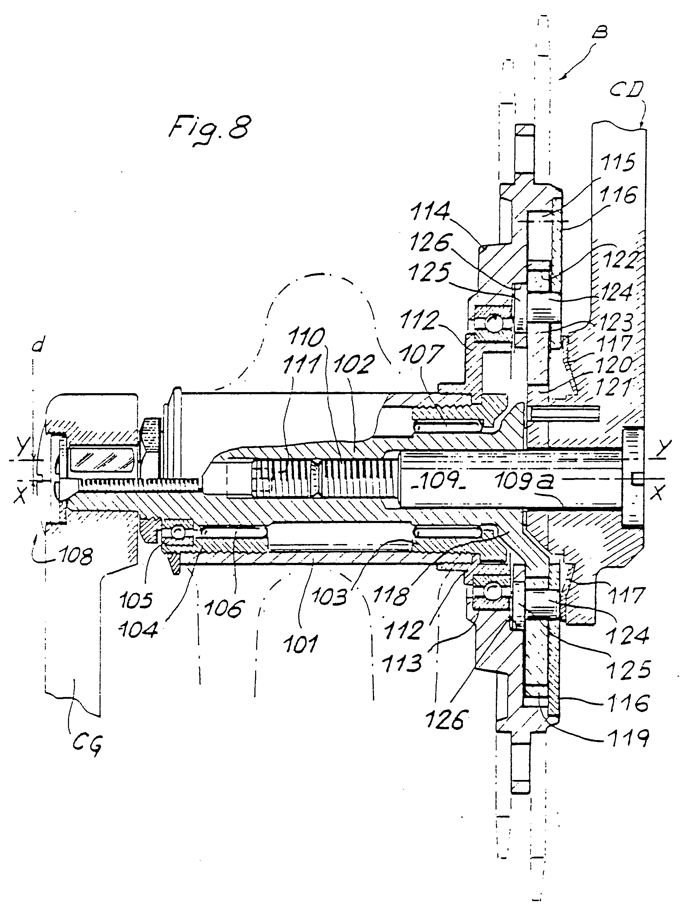

La figure 8 illustre en coupe transversale une autre variante de réalisation du pédalier selon l'invention où les deux manivelles situées respectivement à droite (CD) et à gauche (CG), ne sont plus solidaires de deux arbres coaxiaux. Dans cette variante en effet, l'une de ces manivelles, par exemple la manivelle de gauche (CG), est solidaire d'un arbre unique d'axe X-X, traversant la boîte de pédalier et qui porte à son extrémité opposée la seconde manivelle (CD), elle-même susceptible à chaque tour du pédalier de subir autour de cet arbre un débattement relatif d'amplitude limitée, permettant d'assurer, selon l'invention, le décalage des deux manivelles en position verticale et en même temps, leur alignement en position horizontale, afin de répondre aux objectifs précédemment définis.

Dans cette variante de réalisation qui, en dehors des dispositions caractéristiques brièvement mentionnées ci-dessus, reprend en revanche dans sa majeure partie, un agencement analogue à celui décrit dans la première variante précédemment exposée, on limitera les explications nécessaires aux éléments essentiels, sans reprendre par le détail la description des dispositions secondaires qui ont déjà été précisées ou découlent directement de données évidentes pour l'homme de l'art.

Dans cette variante, on retrouve ainsi une boîte de pédalier 101, à l'intérieur de laquelle est monté un arbre transversal unique 102. L'arbre 102 est creux et tourbillonne à l'intérieur de la boîte de pédalier 101 autour du premier axe X-X défini précédemment, en tournant sur deux cuvettes solidaires de la boîte, respectivement 103 et 104, par l'intermédiaire d'un roulement à billes 105 disposé à l'extrémité de cette boîte du côté de la manivelle de gauche (CG) et sur des roulements à aiguilles 106 et 107 de part et d'autre, au voisinage des manivelles.

La manivelle de gauche (CG) est immobilisée sur l'extrémité de l'arbre 102 qui déborde de la boîte de pédalier 101 sur une distance déterminée et suffisante, au moyen d'un ensemble de fixation 108 dont le détail de la réalisation est lui-même classique et importe peu à l'invention.

A son extrémité opposée, disposée vers la manivelle de droite (CD), l'arbre creux 102 comporte un goujon de fixation de cette dernière 109, dont l'extrémité filetée 110 est vissée dans l'axe de l'arbre 102 jusqu'à buter contre un embout fileté 111 monté à l'intérieur de l'arbre. Sur la surface extérieure 109a du goujon 109, au-delà de l'extrémité correspondante de la boîte de pédalier 101, est montée la manivelle de droite (CD), celle-ci étant apte à subir, selon l'invention, un débattement relatif par rapport à la manivelle de gauche (CG) lors du fonctionnement du pédalier, en particulier au cours d'une rotation complète de celui-ci autour de l'axe X-X.

La boîte de pédalier 101 montre à son extrémité dirigée vers la manivelle de droite (CD), une bague d'excentrement 112 fixe, et sur la surface extérieure de laquelle est disposé un roulement à billes 113, l'axe Y-Y de cette bague d'excentrement 112 étant, conformément à l'invention, décalé d'une distance d donnée par rapport à l'axe X-X précédemment mentionné. Sur la cage extérieure du roulement 113 est par ailleurs monté un carter 114, supportant les plateaux B du pédalier, ce carter comportant dans sa face dirigée vers la manivelle de droite (CD) un logement en creux 115, permettant le montage des guides qui assurent en fonctionnement le décalage des manivelles. Ce logement 115 est fermé extérieurement par un flasque 116 contre la surface extérieure duquel porte une garniture d'étanchéité 117 fixée sur la manivelle de droite (CD) afin de réaliser l'étanchéité du logement 115 et la protection des pièces en mouvement qu'il contient vis-à-vis des salissures extérieures et, le cas échéant, des gravillons de la route.

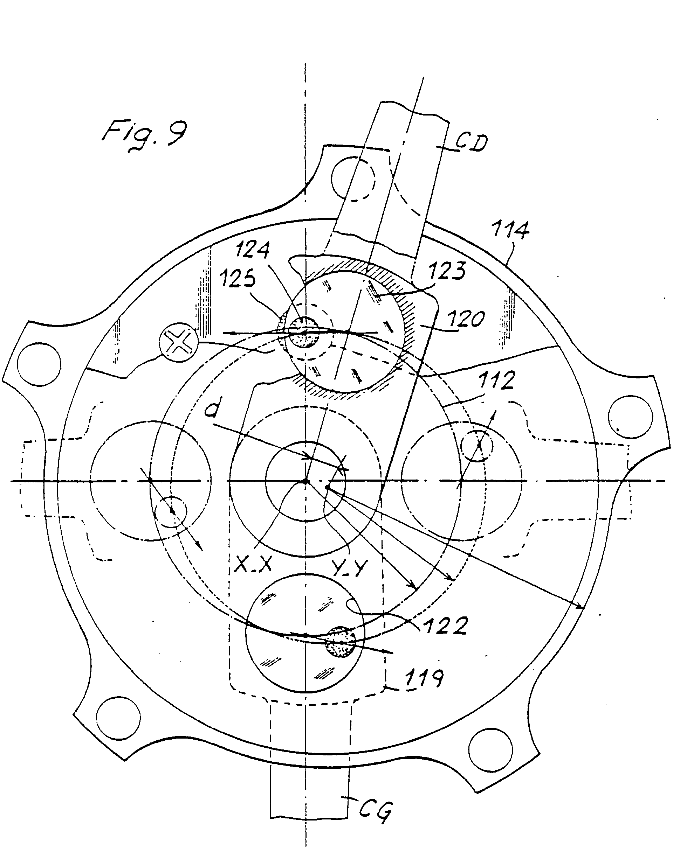

L'arbre 102 solidaire de la manivelle de gauche (CG) du pédalier, se prolonge du côté du carter 114 et à l'intérieur de ce dernier, par une partie évasée 118 elle-même raccordée, dans un plan perpendiculaire à l'axe X-X, par un premier guide 119 plus spécialement visible sur la figure 9. De la même manière, la manivelle de droite (CD) est solidaire d'un second guide 120, fixé contre la surface interne de cette manivelle par des vis 121, les guides 119 et 120 étant disposés sensiblement dans le prolongement l'un de l'autre et dans un plan, perpendiculaire à l'axe X-X de l'arbre 102.

Selon l'invention, et conformément à une caractéristique particulière du mode de réalisation considéré, chacun des guides 119 et 120 comporte sensiblement en son milieu, un logement circulaire 122, mieux visible sur la figure 9, à l'intérieur duquel est emprisonné un galet plat cylindrique 123. Ces galets sont par ailleurs reliés au carter 114 par l'intermédiaire d'un tourillon 124, traversant le galet et comportant une tête 125 engagée dans un trou 126 prévu en regard dans le carter 114, ces pions assurant pour chacun des galets porté par les deux guides 119 et 120 une liaison oscillante entre ce carter tournant sur la bague excentrique 112 autour de l'axe Y-Y et les manivelles CG et CD, tournent elles-mêmes autour de l'axe X-X avec possibilité entre elles d'un décalage relatif approprié.

Le fonctionnement du pédalier dans la variante de réalisation représentée sur les figures 8 et 9, est en effet analogue à celui envisagé avec le premier mode de réalisation de l'invention. En effet, grâce au montage de la bague d'excentrement 112 d'axe Y-Y sur la boîte de pédalier 101 d'axe X-X d'une part, et à la possibilité pour les manivelles (CG et CD) de subir l'une par rapport à l'autre autour de ce même axe X-X, un débattement relatif, se réalise un mouvement orbital oscillant de chacune des manivelles par suite de la coopération dans leurs logements 122 des galets 123 portés par les deux guides 119 et 120 liés à ces manivelles. La variation de la vitesse de déplacement des manivelles qui en résulte au cours d'un cycle complet de rotation du pédalier, est obtenue de façon exactement équivalente, ces manivelles se situant dans le même plan lorsqu'elles sont en position horizontale et étant en revanche décalées d'un angle déterminé par construction lorsque la manivelle de gauche est en position verticale, la manivelle de droite étant alors légèrement en avance.

La variante de réalisation considérée ci-dessus présente l'avantage par rapport à la précédente de permettre un montage plus simple des manivelles l'une par rapport à l'autre en autorisant la fixation de la seconde directement sur l'axe de la première et en évitant de ce fait de ménager à travers la bague d'excentrement un logement polygonal pour l'immobilisation de l'ensemble constitué par les deux arbres coaxiaux prévus dans la première variante. En outre, le montage des galets 123 dans des logements circulaires fermés 122 ménagés dans chacun des deux guides liés aux deux manivelles respectivement, permet d'assurer un guidage constant et permanent de ces galets au cours des hrotations successives du pédalier qui peut être rendu plus facilement entièrement étanche et être ainsi mieux protégé vis-à-vis des salissures ou autres gravillons extérieurs.

## Revendications

1. Pédalier pour bicyclette comprenant deux manivelles (CG, CD) qui portent les pédales (EG, ED) et sont montées à rotation relative l'une par rapport à l'autre autour d'un premier axe (X-X) dans la boîte de pédalier (1-101) solidaire du cadre (D) de la bicyclette, un ensemble comprenant au moins un plateau (B) pourvu d'une denture pour la commande de la chaîne (F), monté rotatif sur ladite boîte (1) autour d'un second axe (Y-Y) parallèle au premier axe, mais décalé par rapport à celui-ci au moyen d'une bague d'excentrement (20-112), fixée sur la boîte de pédalier et présentant une surface externe cylindrique centrée sur le second axe (Y-Y), et des moyens de transmission comprenant, pour chaque manivelle (CG, CD), un guide (11, 16) orienté radialement par rapport au premier axe et un organe cylindrique de transmission (32, 123) destiné à se déplacer vis-à-vis de ce guide (11, 16 ; 119, 120) tout en s'appuyant sur celui-ci dans une direction circonférentielle pour la transmission de l'effort de pédalage, lesdits organes cylindriques de transmission (32, 123) décrivant au cours de la rotation des manivelles (CG, CD) un mouvement orbital oscillant, ledit pédalier étant caractérisé en ce que ledit ensemble comprend en outre un carter composé de deux flasques coaxiaux (27, 28 ; 114, 116) espacés et centrés sur ledit premier axe (X-X), chaque organe cylindrique de transmission (32-123) étant monté à rotation par chacune de ses extrémités dans les flasques (27, 28 ; 114, 116).

2. Pédalier selon la revendication 1, caractérisé en ce que chacun des organes cylindriques de transmission (32, 123) comporte un tourillon (31, 124) monté, d'une part, par une première partie extrême, dans un trou ou logement (30, 126) prévu dans le premier flasque (27, 114), et d'autre part, par une seconde partie extrême, dans un palier (33) ménagé dans la paroi intérieure du second flasque (28, 116), et un galet monté à rotation sur le tourillon.

3. Pédalier selon l'une des revendications 1 ou 2, caractérisé en ce que le carter (27, 28 ; 114, 116) est monté par l'intermédiaire d'un roulement (24, 113) sur la bague d'excentrement (20, 112).

4. Pédalier selon l'une quelconque des revendications précédentes, caractérisé en ce que les manivelles (CG, CD) sont respectivement solidaires de deux arbres coaxiaux (4, 5) montés à rotation l'un par rapport à l'autre, les guides (11, 16) étant fixés sur lesdits arbres à une de leurs extrémités communes.

5. Pédalier selon l'une quelconque des revendications 1 à 3, caractérisé en ce que l'une des manivelles (CG) est solidaire d'un arbre (102) tourillonnant à travers la boîte du pédalier (104) terminé à son extrémité du carter du plateau (B) par un guide correspondant (119), l'autre manivelle (CD) étant montée coaxialement dudit arbre (102) et étant solidaire de son propre guide (120) s'étendant parallèlement à ladite manivelle (CD).

6. Pédalier selon l'une quelconque des revendications 2 à 4, caractérisé en ce que lesdits guides (11, 16) sont formés par des plaques en forme de fourche solidaires respectivement desdits arbres et s'étendant radialement dans un même plan radial à partir de ceux-ci dans des sens diamétraux opposés, et en ce que lesdits galets (23) sont engagés respectivement dans lesdits guides (11, 16).

7. Pédalier selon l'une quelconque des revendications 2, 3 ou 5, caractérisé en ce que les galets (123) sont engagés dans des logements circulaires (122) ménagés dans chacun des guides (119, 120) dans lesquels ils subissent un mouvement oscillant.

8. Pédalier selon la revendication 6, caractérisé en ce que l'un desdits arbres (4) est tubulaire et en ce que l'autre arbre (5) est disposé dans cet arbre tubulaire en s'étendant sur pratiquement toute la longueur de ce dernier.

9. Pédalier selon la revendication 6 ou 8, caractérisé en ce que la bague d'excentrement (20) comporte une ouverture polygonale (21) centrée sur le premier axe (X-X) et ajoutée sur un écrou (18) de même profil extérieur (19), vissé dans la boîte de pédalier (1).

## Claims

1. Crank-gear for a bicycle comprising two cranks (CG, CD) which carry the pedals (EG, ED) and which are rotatively mounted relative to each other around a first axis (X-X) in the crank-gear case (1-101) fixed to the frame (D) of the bicycle, an assembly comprising at least one sprocket plate (B) provided with a toothing for the control of the chain (F) rotatively mounted on said gear case (1) around a second axis (Y-Y) parallel to the first axis but offset relative to the latter by means of a decentering ring (20-112) fixed on the case of the crank-gear and exhibiting an external cylindrical surface centered on the second axis (Y-Y) and transmission means comprising for each crank (CG, CD), a guide (11, 16) radially oriented relative to the first axis and a cylindrical transmission member (32, 123) intended to be displaced relative to this guide (11, 16 ; 119, 120) while being supported on the latter in a circumferential direction for the transmission of the pedalling force, said cylindrical members (32, 123) describing in the course of the rotation of the cranks (CG, CD) an orbital oscillating motion, said crank-gear being characterized in that said assembly further comprises a housing comprising two coaxial flanges (27, 28 ; 114, 116) spaced and centered on said first axis (X-X), each cylindrical transmission member (32, 123) being rotatively mounted at each of its ends in the flanges (27, 28 ; 114, 116).

2. Crank-gear according to claim 1, characterized in that each of the cylindrical transmission members (32, 123) comprises a journal (31, 124) mounted, on the one hand, by a first end part, in a hole or socket (30, 126) provided in the first flange (27, 114) and, on the other hand, by a second end part, in a bearing (33) provided in the interior wall of the second flange (25, 116) and a roller rotatively mounted on the journal.

3. Crank-gear according to one of claims 1 or 2, characterized in that the housing (27, 25 ; 114, 116) is mounted by the intermediary of bearing (24, 113) on the decentering ring (20, 112).

4. Crank-gear according to any one of the preceding claims, characterized in that the cranks (CG, CD) are respectively locked to two coaxial shafts (4, 5) mounted for rotation of one relative to the other, the guides (11, 16) being fixed on said shafts at one of their common ends.

5. Crank-gear according to any one of claims 1 to 3, characterized in that one of the cranks (CG) is locked to a shaft (102) journalled through the case of the crank-gear (104) and terminated at its end on the side of the sprocket plate (B) by the corresponding guide (119), the other crank (CD) being mounted coaxially to said shaft (102) and being locked to its own guide (120) extending parallel to said crank (CD).

6. Crank-gear according to any one of claims 2 to 4, characterized in that said guides (11, 16) are formed by plates in fork form locked respectively to said shafts and extending radially in a same radial plane starting from the latter in diametrically opposed senses and in that said rollers (23) are respectively engaged in said guides (11, 16).

7. Crank-gear according to any one of claims 2, 3 or 5, characterized in that said rollers (123) are engaged in circular housings (122) arranged in each of the guides (119, 120) in which they undergo an oscillating motion.

8. Crank-gear according to claim 6, characterized in that one of said shafts (4) is tubular and in that the other shaft (5) is placed in this tubular shaft and extending over practically all the length of this latter.

9. Crank-gear according to claim 6 or 8, characterized in that the decentering ring (20) includes a polygonal opening (21) centered on the first axis (X-X) and fixed on a nut (18) of the same outer profile (19) screwed into the case of the crank-gear (1).

## Patentansprüche

1. Pedalanordnung für Fahrrad, umfassend zwei Tretkurbeln (CG, CD), die die Pedale (EG, ED) tragen und drehbeweglich relativ zueinander um eine erste Achse (X-X) in dem mit dem Fahrradrahmen (D) verbundenen Tretlager (1, 101) angeordnet sind, einer Baugruppe mit mindestens einem Zahnkranz (B) für den Antrieb der Kette (F), drehbeweglich um eine zweite, zur ersten parallele Achse (Y-Y) im Tretlager (1) angeordnet, welche zweite Achse zur ersten mittels eines Exzenterringes (20, 112) versetzt ist, der am Tretlager befestigt ist und eine zylindrische, bezüglich der zweiten Achse (Y-Y) zentrierte Außenfläche aufweist, und Transmissionsmittel, die für jede Tretkurbel (CG, CD) ein radial bezüglich der ersten Achse orientiertes Führungsstück (11, 16) sowie ein zylindrisches Transmissionsorgan (32, 123) umfassen, das dazu bestimmt ist, sich gegenüber diesem Führungsstück (11, 16 ; 119, 120) unter Anlage an diesem in Umfangsrichtung zur Übertragung der Pedalbetätigungskraft zu verlagern, welche zylindrischen Transmissionsorgane (32, 123) während des Umlaufs der Tretkurbeln (CG, CD) eine oszillierende Orbitalbewegung ausführen, welche Pedalanordnung dadurch gekennzeichnet ist, daß die genannte Baugruppe ferner ein Gehäuse aus zwei koaxialen beabstandeten Flanschen (27, 28 ; 114, 116) umfaßt, zentriert auf die erste Achse (X-X), wobei jedes zylindrische Transmissionsorgan (32-123) drehbeweglich mit jedem seiner Enden in den Flanschen (27, 28 ; 114, 116) gelagert ist.

2. Pedalanordnung nach Anspruch 1, dadurch gekennzeichnet, daß jedes zylindrische Transmissionsorgan (32, 123) einen Drehzapfen (31, 124) umfaßt, der einerseits mit einem ersten Endabschnitt in einem Loch oder einer Ausnehmung (30, 126), vorgesehen in dem ersten Flansch (27, 114) und andererseits mit einem zweiten Endabschnitt in einem Lager (33) montiert ist, das in der Innenwandung des zweiten Flansches (28, 116) vorgesehen ist, sowie einen drehbeweglich auf dem Drehzapfen gelagerten Laufring umfaßt.

3. Pedalanordnung nach einem der Ansprüche 1 oder 2, dadurch gekennzeichnet, daß das Gehäuse (27, 28 ; 114, 116) mit einem zwischengeschalteten Lager (24, 113) auf dem Exzenterring (20, 112) montiert ist.

4. Pedalanordnung nach einem der vorangehenden Ansprüche, dadurch gekennzeichnet, daß die Tretkurbeln (CG, CD) mit jeweils einer von zwei koaxialen Wellen (4, 5) verbunden sind, die relativ zueinander drehbar sind, wobei die Führungsstücke (11, 16) auf den genannten Wellen an einem ihrer gemeinsamen Enden befestigt sind.

5. Pedalanordnung nach einem der Ansprüche 1 bis 3, dadurch gekennzeichnet, daß eine der Tretkurbeln (CG) mit einer Welle (102) verbunden ist, die drehbeweglich das Tretlager (104) durchsetzt und an ihrem Ende nahe dem Gehäuse des Zahnkranzes (B) in einem entsprechenden Führungsstück (119) endet, während die andere Tretkurbel (CD) koaxial bezüglich dieser Welle (102) montiert ist und mit ihrem eigenen Führungsstück (120), das sich parallel zu dieser Tretkurbel (CD) erstreckt, verbunden ist.

6. Pedalanordnung nach einem der Ansprüche 2 bis 4, dadurch gekennzeichnet, daß die Führungsstücke (11, 16) von gabelförmigen Platten gebildet sind, die jeweils mit den genannten Wellen verbunden sind und sich radial in derselben Radialebene, ausgehend von jenen, und in entgegengesetzten Richtungen erstrecken, und daß die genannten Laufringe (23) jeweils in den genannten Führungsstücken (11, 16) aufgenommen sind.

7. Pedalanordnung nach einem der Ansprüche 2, 3 oder 5, dadurch gekennzeichnet, daß die Laufringe (123) in runde Ausnehmungen (122) aufgenommen sind, die in jedes der Führungsstücke (119, 120) vorgesehen sind, in welchen sie einer oszillierenden Bewegung unterworfen sind.

8. Pedalanordnung nach Anspruch 6, dadurch gekennzeichnet, daß eine der genannten Wellen (4) rohrförmig ist und daß die andere Welle (5) in dieser rohrförmigen Welle angeordnet ist und sich praktisch über deren gesamte Länge erstreckt.

9. Pedalanordnung nach Anspruch 6 oder 8, dadurch gekennzeichnet, daß der Exzenterring (20) eine polygonale Öffnung (21) aufweist, zentriert auf die erste Achse (X-X) und aufgesetzt auf eine Mutter (18) gleichen Außenprofils (19), die in das Tretlager eingeschraubt ist.

Fig.1

Fig.2

Fig.3

Fig. 4

Fig.5

Fig.6

Fig. 7A

Fig. 7B

Fig. 8

Fig. 9